Europäisches Patentamt

European Patent Office

Office européen des brevets

(19)

(11) Publication number: **0 087 885**

**A2**

(12) **EUROPEAN PATENT APPLICATION**

(21) Application number: **83300779.2**

(22) Date of filing: **16.02.83**

(51) Int. Cl.³: **B 60 H 3/04**
**B 60 P 3/20**

(30) Priority: **03.03.82 GB 8206273**

(43) Date of publication of application:
**07.09.83 Bulletin 83/36**

(84) Designated Contracting States:
**AT BE DE FR IT NL SE**

(71) Applicant: **Stuckey, Trevor Colley**
**Sleepy Hollow Hungerford**
**Old Bursledon Southampton Hampshire(GB)**

(72) Inventor: **Stuckey, Trevor Colley**
**Sleepy Hollow Hungerford**
**Old Bursledon Southampton Hampshire(GB)**

(74) Representative: **Topps, Ronald et al,**
**D. YOUNG & CO 10 Staple Inn**
**London WC1V 7RD(GB)**

(54) Refrigeration system for a trailer.

(57) A refrigeration system for cooling the interior of the body 11 of a trailer 10, in which a hydraulic pump 15 is driven from an axle 13 of a road wheel 12 via a gear box and the pump 15 drives a hydraulic motor 25 which is arranged to drive the compressor 16 through a clutch 27, a fan 18 being provided for moving air over the condenser 17, the fan 18 being driven independently of the motor 25 for driving the compressor 16.

FIG. 2

EP 0 087 885 A2

Croydon Printing Company Ltd.

1

## REFRIGERATION SYSTEM FOR A TRAILER

This invention relates to a refrigeration system for cooling the interior of a trailer body.

It is known to cool the interior of a trailer body by providing a refrigeration unit mounted on the front end of the trailer, the refrigeration unit incorporating an internal combustion engine, usually a diesel engine, to drive the compressor of the unit. Such an arrangement suffers from a number of disadvantages. One disadvantage is that the internal combustion engine of the unit can not be cycled on and off whilst the trailer is being moved by the traction vehicle and it continues to drive the compressor even when the interior of the trailer body has reached its desired temperature. This causes "reverse cycle" operation causing hot air to be discharged from the evaporator and results in temperature fluctuations within the trailer body. Another disadvantage is that the internal combustion engine consumes large quantities of fuel and results in high operating costs. Yet another disadvantage is that the refrigeration unit is heavy and requires a fuel tank which increases the road weight of the trailer and thus effectively reduce the load weight which can be carried in the body of the trailer. Also the continuously running internal combustion engine is noisy and the exhaust emission causes pollution of the atmosphere. The driver of the vehicle is responsible for maintaining and stopping and starting the internal combustion engine of the refrigeration unit and usually requires extra payment for carrying out these duties. Also the routine servicing of the refrigeration unit requires a qualified refrigeration service engineer and a qualified engine fitter.

According to the present invention there is provided a refrigeration system for cooling the interior of a trailer body, comprising a hydraulic pump arranged to be driven from an axle of the trailer, the output side of said pump being connected to a hydraulic motor arranged to drive the compressor of the refrigeration system, a fan for moving air over the condenser of the refrigeration system and means for driving the fan independently of the motor for driving the compressor.

Preferably the hydraulic motor is arranged to drive the compressor through an electrically operated clutch and said motor is also arranged to drive an electric generator for supplying electrical energy to operate the clutch via a voltage sensing device.

Preferably the output side of said pump is connected to a preferential flow dividing valve for directing pressure fluid to said motor and to a second hydraulic motor constituting said means for driving the fan, said preferential flow dividing valve ensuring that the second hydraulic motor is driven at low forward speed of the trailer and that the motor for driving the compressor is only driven when the flow from the pump exceeeds a predetermined minimum value.

An embodiment of the present invention will now be described, by way of an example, with reference to the accompanying drawings, in which:-

Figure 1 is a diagrammatic perspective view of a trailer provided with a refrigeration system according to the present invention,

Figure 2 is a diagram showing the hydraulic circuit, and

Figure 3 is a diagrammatic sectional view of a preferential flow dividing valve as provided in the circuit of Figure 2.

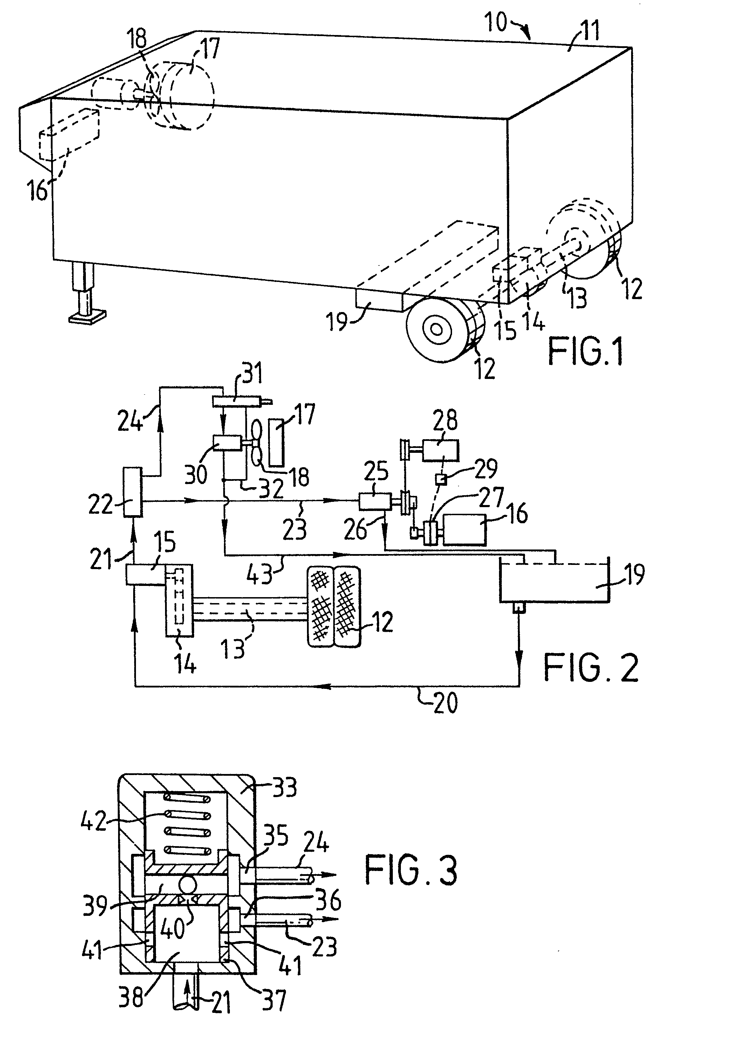

The trailer 10 shown in Figure 1 has a body 11 and ground engaging rear wheels 12. One of the wheels 12 has an axle 13 which at its inner end is provided with a gear box 14 to which is drivingly connected a hydraulic pump 15. The trailer 10 is provided with a refrigeration system which includes a compressor 16 and a condenser 17. Associated with the condenser 17 is a fan 18 which moves air over the condenser 17 so that the air is cooled before entering the interior of the body 11. The refrigeration unit is preferably provided with electric motors (not shown) for driving the compressor 16 and fan 18 when the trailer is parked for long periods and where a suitable source of electrical energy is available. Such a refrigeration unit can be as described in our European Patent Publication No. 0 009 969.

Referring now to Figure 2, the hydraulic pump 15 receives hydraulic fluid from a reservoir 19 via a conduit 20 and supplies hydraulic fluid under pressure to a conduit 21 which is connected to a preferential flow dividing valve 22 having an output conduit 23 and an output conduit 24. The output conduit 23 is connected to a hydraulic motor 25 which is connected by a return conduit 26 to the reservoir 19. The hydraulic motor 25 is arranged to drive the compressor 16 via an electro-magnetically operated clutch 27, and the motor 25 also drives an electric generator 28 which supplies electrical energy to the clutch 27 via a voltage sensing switching unit 29. The unit 29 is arranged to allow electric current to flow to the electro-magnetically operated clutch 27 only when the voltage generated by the generator 28 reaches a predetermined value.

The conduit 24 is connected to a hydraulic motor 30 via a switching unit 31 which is also connected to a by-pass conduit 32 for by-passing the motor 30.

The preferential flow dividing valve 22 is shown diagrammatically in Figure 3 and consists of a casing 33 having an inlet 34 connected to the conduit 21, a first outlet 35 connected to the conduit 24 and a second outlet 36 connected to the conduit 23. Slidably mounted within the casing 33 is a valve member 37 having a longitudinally extending bore 38 which communicates with transverse bores 39 via a restricted passage 40. The bore 38 communicates with the inlet 34 and transverse bores 41 communicate with the bore 38. The valve member 37 is urged by a spring 42 to the position shown in Figure 3 where the transverse bores 41 are closed.

The mode of operation of the refrigeration system will now be described. When the trailer 10 is connected to a towing vehicle and moved forwardly the wheels 12 will rotate the axle 13 and through the gear box 14 will drive the hydraulic pump 15 which will draw hydraulic fluid from the reservoir 19 via the conduit 20 and will supply hydraulic fluid under pressure to the flow dividing valve 22 via the conduit 21.

At slow forward speed of the trailer 10 there is insufficient flow of hydraulic fluid from the pump 15 to drive the hydraulic motor 25 and the compressor 16 and initially the hydraulic fluid flowing to the valve 22 passes only through the restricted passage 40 and to the transverse bores 39 so as to flow to the outlet 35 and via the conduit 24 and valve 31 to the hydraulic motor 30 to drive the fan 18, the fluid being returned to the reservoir 19 via a conduit 43.

As the forward speed of the trailer increases the flow from the pump 15 will increase and when the pressure of fluid within the bore 38 rises to a predetermined level it will overcome the force of the spring 42 and the valve 37 will move so as to place the bores 41 in communication with the outlet 36 and fluid will flow via the conduit 23 to the hydraulic motor 25 to drive it and be returned via the conduit 26. At this time the clutch 27 will be de-energised and thus disengaged. The motor 25 will drive the generator 28 and when sufficient electrical voltage is generated the switching unit 29 will supply the voltage to the clutch 27 thus causing the clutch to be engaged and the compressor 16 will be driven by the hydraulic motor 25.

Thus the compressor 16 is only driven when the hydraulic motor 25 is producing sufficient torque to drive the compressor 16 without snatching.

It will be appreciated that the fan 18 could be driven by other suitable means instead of by a hydraulic motor, in which case the valve 22 can be dispensed with. Also the generator 28 and switching means 29 could be replaced by any other trailer speed sensitive device for engaging the clutch 27.

BAD ORIGINAL

CLAIMS

1.     A refrigeration system for cooling the interior of a trailer body (10), comprising a hydraulic pump (15) arranged to be driven from an axle (13) of the trailer, the output side of said pump (15) being connected to a hydraulic motor (25) arranged to drive the compressor (16) of the refrigeration system, a fan (18) for moving air over the condenser (17) of the refrigeration system and means (30) for driving the fan (18) independently of the motor (25) for driving the compressor (16).

2.     A refrigeration system as claimed in claim 1, in which the hydraulic motor (25) is arranged to drive the compressor (16) through an electrically operated clutch (27) and said motor (25) is also arranged to drive an electric generator (28) for supplying electrical energy to operate the clutch (27) via a voltage sensing device (29).

3.     A refrigeration system as claimed in claim 1 or claim 2, in which the output side of said pump (15) is connected to a preferential flow dividing valve (22) for directing pressure fluid to said motor (25) and to a second hydraulic motor (30) constituting said means for driving the fan (18), said preferential flow dividing valve (22) ensuring that the second hydraulic motor (30) is driven at low forward speed of the trailer and that the motor (25) for driving the compressor (16) is only driven when the flow from the pump (15) exceeeds a predetermined minimum value.

4.     A refrigeration system as claimed in any preceding claim, including electric motors for driving the compressor and the fan when the trailer is stationary for long periods.

5.     A trailer body provided with a refrigeration system as claimed in any preceding claim.

FIG.1

FIG. 2

FIG. 3